# EUROPEAN PATENT APPLICATION

(11) **EP 4 521 532 A1**
(43) Date of publication of application: **12.03.2025**
(21) Application number: 24813088.2
(22) Date of filing: 20.02.2024
(51) Int. Cl.: H01M 50/244, H01M 50/233, H01M 50/289, H01M 50/224

(54) **EXTERNAL BATTERY MODULE FRAME, BATTERY MODULE, AND BATTERY PACK**

(30) Priority: 28.06.2023 CN 202321659485 U
(71) Applicant: Eve Energy Co., Ltd, Huizhou, Guangdong 516006 (CN)
(72) Inventor: ZHOU, Hongquan, Guangdong 516006 (CN)
(74) Representative: Berggren Oy
(86) International application number: PCT/CN2024/077714
(87) International publication number: WO 2025/001186

(57) **Abstract**

This application discloses a battery module outer frame, a battery module and a battery pack. The battery module outer frame provided by this application includes a side plate and an end plate. The side plate extends along a first direction. The side plate includes a side plate body and a hanger. The side plate body and the hanger are integrally roll formed. The end plate extends along a second direction. The end plate and the side plate body are connected by laser welding. The first direction is perpendicular to the second direction.

## Description

This application claims priority to Chinese Patent Application No. 202321659485.6 submitted to the Chinese Patent Office on June 28, 2023. The entire disclosure of the aforementioned application is incorporated herein by reference in its entirety.

### TECHNICAL FILED

The present disclosure relates to the technical field of batteries, in particular to a battery module outer frame, a battery module, and a battery pack.

### BACKGROUND

With the development of power battery systems and the increase in energy density, the battery systems are integrated in the form of large modules and cell to pack (CTP) to improve the overall vehicle range and reduce costs. An outer frame of the battery module is generally formed by enclosing the left and right side plates and the front and rear end plates together. When manufacturing the side plate, it is usually necessary to punch out the side plate body and the hanger by using the side plate body stamping die and the hanger stamping die, respectively, and then the hanger is welded to the side plate body. The manufacturing process of the side plate is complicated, and the deformation between the side plate body and the hanger is easy to occur.

With the development of technology, in order to facilitate the processing of the side plate, the side plate body is usually bent to form the hanger, but this processing method may not meet the processing of complex hanger structures, and also reduces the structural strength of the side plate.

Therefore, there is an urgent need for a battery module outer frame, a battery module, and a battery pack to solve the above problems.

### SUMMARY

The present disclosure provides a battery module outer frame, a battery module, and a battery pack to solve the above technical problems.

In a first aspect, the present disclosure provides a battery module outer frame, including:
a side plate extending in a first direction, in which the side plate includes a side plate body and a hanger, and the side plate body and the hanger are integrally roll formed; and
an end plate extending in a second direction, in which the end plate is connected to the side plate body by laser welding, and the first direction is perpendicular to the second direction.

In a second aspect, the present disclosure provides a battery module including a module body and the battery module outer frame as described above, and the module body is fixed in the battery module outer frame.

In a third aspect, the present disclosure provides a battery pack including a box and the battery module as described above, and the battery module is disposed in the box.

### BENEFICIAL EFFECTS

The beneficial effects of the present disclosure are as follows:

A battery module outer frame provided by the present disclosure includes a side plate and an end plate. The side plate extends along a first direction. The side plate includes a side plate body and a hanger. The side plate body and the hanger are integrally roll formed. The end plate extends along a second direction. The end plate and the side plate body are connected by laser welding. The first direction is perpendicular to the second direction. Since the side plate body and the hanger are integrally roll formed, the processing of the complex hanger is satisfied, and the structural strength of the whole side plate is improved. The processing is convenient, and the manufacturing cost of the side plate is reduced. The end plate and the side plate body may be connected by laser welding without laser filling welding, so that the welding process between the end plate and the side plate body is simple, and the manufacturing cost of the whole battery module outer frame is reduced.

In the battery module provided by the present disclosure, by applying the battery module outer frame, the processing process of the battery module is simplified and the manufacturing cost of the battery module is reduced.

In the battery pack provided by the present disclosure, by applying the battery module, the processing process of the battery pack is simplified and the manufacturing cost of the battery pack is reduced.

### BRIEF DESCRIPTION OF THE DRAWINGS

FIG. 1 is an explosion view of the battery pack provided by some embodiments of the present disclosure.
FIG. 2 is an explosion view of the battery module provided by some embodiments of the present disclosure.
FIG. 3 is a partial cross-sectional view of a battery pack provided by some embodiments of the present disclosure.
FIG. 4 is an enlarged view at A in FIG. 3.

### Reference numerals:

100, battery module; 200, liquid cooling plate; 300, box; 310, cross beam; 10, battery module outer frame; 1, side plate; 11 side plate body; 12, hanger; 2, end plate; 3, hot-pressed insulating film; 4, middle plate; 5, upper cover; 20, module body; 30, thermally conductive structural adhesive; 40, limiting member; 50, connecting structural adhesive.

### DETAILED DESCRIPTION

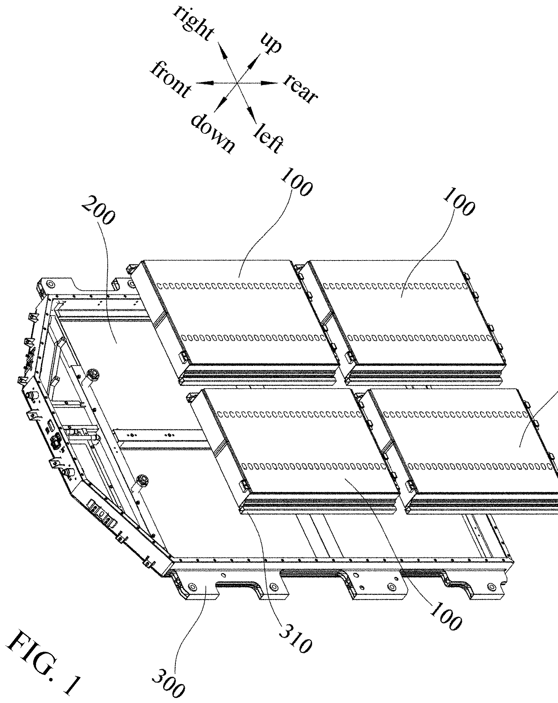

As shown in FIG. 1, the embodiments provide a battery pack that may be applied to a new energy vehicle, but not limited thereto, and may also be applied to other electrical devices. Specifically, the battery pack includes a box 300 and a plurality of battery modules 100, and the plurality of battery modules 100 are integrated in the box 300 by CTP.

In order to ensure the normal operation of the battery module 100, the battery pack disclosed in the embodiments further includes a liquid cooling plate 200. The liquid cooling plate 200 is disposed at a bottom of the box 300. A bottom of the battery module 100 is disposed on the liquid cooling plate 200. The liquid cooling plate 200 dissipates and cools the battery module 100 by liquid cooling to ensure the normal operation of the battery module 100.

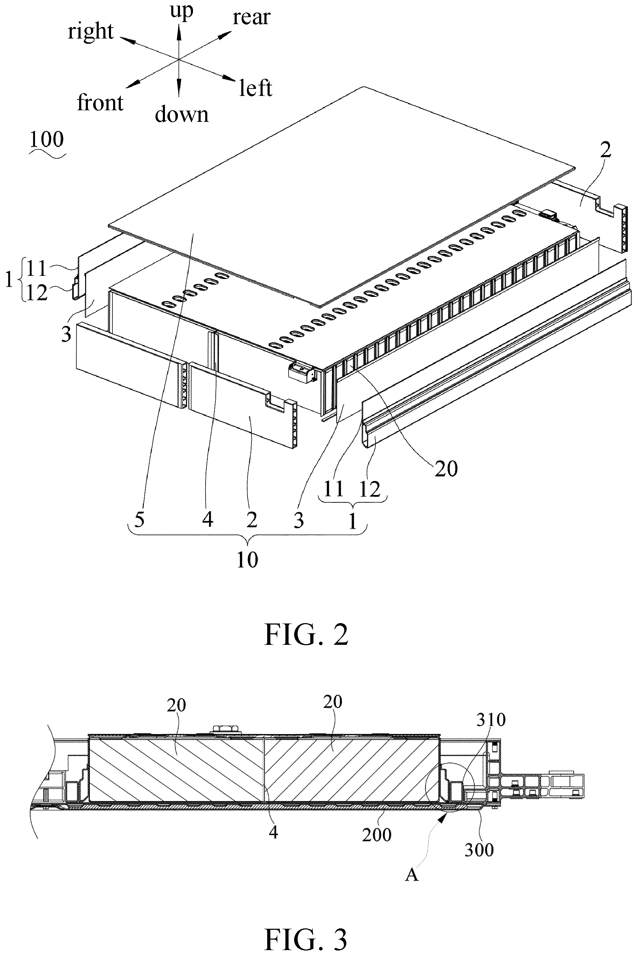

As shown in FIG. 2, the battery module includes a module body and a battery module outer frame 10. The module body 20 is fixed in the battery module outer frame 10. It should be noted that in the embodiments, the module body 20 includes a plurality of cells arranged at intervals, and two module bodies 20 are arranged at intervals in each battery module outer frame 10 in the left-right direction, so that the battery module 100 has a double-row structure. In other embodiments, more module bodies 20 may also be installed in each battery module outer frame 10.

Specifically, as shown in FIG. 2, the battery module outer frame 10 includes a side plate 1 and an end plate 2. The side plate 1 extends in a first direction (the front-rear direction in the figure). The end plate 2 extends in a second direction (the left-right direction in the figure). The end plate 2 is connected to the side plate 1. Preferably, in the embodiments, two side plates 1 are provided at intervals in the left-right direction, and two end plates 2 are provided at intervals in the front-rear direction. The two side plates 1 and the two end plates 2 are jointly enclosed to form a mounting frame, and the plurality of module bodies 20 are fixed in the mounting frame.

In the related art, when manufacturing the side plate, it is usually necessary to punch out the side plate body and the hanger by using the side plate body stamping die and the hanger stamping die, respectively, and then the hanger is welded to the side plate body. The manufacturing process of the side plate is complicated, and the deformation between the side plate body and the hanger is easy to occur. In order to facilitate the processing of the side plate, the side plate body is usually bent to form hanger, but this processing method may not meet the processing of complex hanger structures, and also reduces the structural strength of the side plate.

In order to solve the above problems, as shown in FIG. 2, the side plate 1 provided in the embodiments includes a side plate body 11 and a hanger 12. The side plate body 11 and the hanger 12 are integrally roll formed, and the end plate 2 and the side plate body 11 are connected by laser welding. Since the side plate body 11 and the hanger 12 are integrally roll formed, the processing of the complex hanger 12 is satisfied, and the structural strength of the whole side plate 1 is improved. The processing is convenient, and the manufacturing cost of the side plate is reduced. The end plate 2 and the side plate body 11 may be connected by laser welding without laser filling welding, so that the welding process between the end plate 2 and the side plate body 11 is simple, and the manufacturing cost of the whole battery module outer frame 10 is reduced.

It should be noted that, in the embodiments, the side plate 1 is made of a 5-series aluminum alloy material, and the end plate 2 is made of a 6-series aluminum alloy material, thereby ensuring that the side plate body 11 and the end plate 2 may be connected only by laser welding. In addition, the 5-series aluminum alloy has the advantage of being lightweight.

Further, as shown in FIG. 2, the battery module outer frame 10 further includes a middle plate 4 extending in the front-rear direction. The middle plate 4 is sandwiched between two adjacent module bodies 20. The middle plate 4 and the end plate 2 are connected by laser welding. Since the middle plate 4 and the end plate 2 are connected also by laser welding, the welding mode of the entire battery module outer frame 10 is unified, and it is more convenient to process and manufacture the entire battery module outer frame 10.

In addition, as shown in FIG. 2, the battery module outer frame 10 further includes a hot-pressed insulating film 3. The hot-pressed insulating film 3 is hot-pressed onto the side plate body 11, thereby ensuring the firmness of hot-pressing between the hot-pressed insulating film 3 and the side plate body 11, and ensuring the reliability of insulating by the hot-pressed insulating film 3.

Further, in the embodiments, the battery module outer frame 10 further includes an upper cover 5. The upper cover 5 is buckled on the mounting frame and located on a top of the module body 20, so as to better realize the protection of the module body 20.

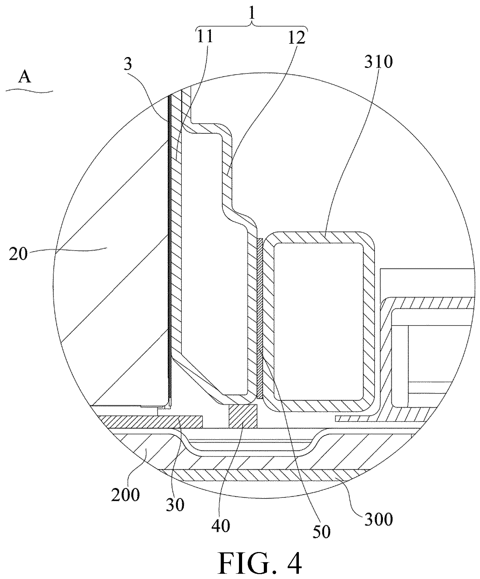

As shown in FIGS. 3 and 4, the battery module 100 provided by the embodiments further includes a thermally conductive structural adhesive 30. The bottom of the module body 20 is bonded to the liquid cooling plate 200 through the thermally conductive structural adhesive 30, which not only ensures the effect of heat dissipation and cooling of the module body 20 by the liquid cooling plate 200, but also ensures the stability and reliability of the connection between the module body 20 and the liquid cooling plate 200.

Preferably, as shown in FIGS. 3 and 4, the battery module 100 further includes a connecting structural adhesive 50. A side portion of the hanger 12 is bonded to the cross beam 310 of the box 300 through the connecting structural adhesive 50, thereby improving the connection stiffness between the hanger 12 and the cross beam 310, reducing the mechanical connection, thereby improving the specific energy of the entire battery pack and reducing the cost.

In the embodiments, as shown in FIG. 4, the battery module 100 further includes a limiting member 40 disposed at the bottom of the side plate 1. The limiting member 40 is used to limit the thickness of the thermally conductive structural adhesive 30 to ensure that the thickness of the thermally conductive structural adhesive 30 is within a required range, thereby ensuring the thermal conductivity of the thermally conductive structural adhesive 30.

Specifically, the limiting member 40 is a foam. The foam is bonded to the bottom of the side plate 1, and the bottom of the foam is in contact with the liquid cooling plate 200, so that the thickness of the thermally conductive structural adhesive 30 is limited by the thickness of the foam. In addition, the foam also plays a cushioning and protective role for the side plate 1.

## Claims

1. A battery module outer frame, comprising:
a side plate (1) extending in a first direction, wherein the side plate (1) comprises a side plate body (11) and a hanger (12), and the side plate body (11) and the hanger (12) are integrally roll formed; and
an end plate (2) extending in a second direction, wherein the end plate (2) is connected to the side plate body (11) by laser welding, and the first direction is perpendicular to the second direction.

2. The battery module outer frame of claim 1, further comprising:
a hot-pressed insulating film (3) hot-pressed onto the side plate body (11).

3. The battery module outer frame of claim 1, wherein two side plates (1) are provided at intervals in the second direction, two end plates (2) are provided at intervals in the first direction, and the two side plates (1) and the two end plates (2) are jointly enclosed to form a mounting frame configured to fix a plurality of module bodies (20).

4. The battery module outer frame of claim 3, further comprising:
a middle plate (4) extending along the first direction, wherein the middle plate (4) is configured to be sandwiched between adj acent two of the module bodies (20), and the middle plate (4) is connected to the end plate (2) by laser welding.

5. The battery module outer frame of any one of claims 1 to 4, wherein the side plate (1) is made of a 5-series aluminum alloy material, and the end plate (2) is made of a 6-series aluminum alloy material.

6. A battery module, wherein the battery module comprises a module body (20) and the battery module outer frame of any one of claims 1 to 5, and the module body (20) is fixed in the battery module outer frame.

7. The battery module of claim 6, further comprising:
a thermally conductive structural adhesive (30), wherein a bottom of the module body (20) is bonded to a liquid cooling plate (200) through the thermally conductive structural adhesive (30).

8. The battery module of claim 7, wherein the battery module further comprises a limiting member (40) disposed at a bottom of the side plate (1), and the limiting member (40) is configured to limit a thickness of the thermally conductive structural adhesive (30).

9. The battery module of claim 8, wherein the limiting member (40) is a foam, the foam is bonded to a bottom of the side plate (1), and a bottom of the foam is in contact with the liquid cooling plate (200).

10. The battery module of claim 6, further comprising:
a connecting structural adhesive (50), wherein a side portion of the hanger (12) is bonded to a cross beam (310) of a box (300) through the connecting structural adhesive (50).

11. A battery pack, wherein the battery pack comprises a box (300) and the battery module of any one of claims 6 to 10, and the battery module is fixed in the box (300).
